Europäisches Patentamt

European Patent Office

Office européen des brevets

(19)

(11) EP 0 516 537 B1

(12) FASCICULE DE BREVET EUROPEEN

(45) Date de publication et mention
de la délivrance du brevet:
10.07.1996 Bulletin 1996/28

(51) Int Cl.⁶: **F16F 15/00**, G05D 19/00

(21) Numéro de dépôt: 92401449.1

(22) Date de dépôt: 26.05.1992

(54) **Dispositif d'atténuation des vibrations périodiques d'une structure mécanique**

Vorrichtung zur Dämpfung der periodischen Schwingungen einer mechanischen Struktur

Device for reducing periodic vibrations of a mechanical structure

(84) Etats contractants désignés:
BE DE ES FR GB IT LU NL SE

(30) Priorité: 31.05.1991 FR 9106580

(43) Date de publication de la demande:
02.12.1992 Bulletin 1992/49

(73) Titulaire: HUTCHINSON S.A.
75008 Paris Cedex 08 (FR)

(72) Inventeur: Gennesseaux, André
F-75012 Paris (FR)

(74) Mandataire: Fréchède, Michel et al
Cabinet Plasseraud
84, rue d'Amsterdam
F-75009 Paris (FR)

(56) Documents cités:
EP-A- 0 157 693          EP-A- 0 300 445
EP-A- 0 348 087          EP-A- 0 409 462
EP-A- 0 412 853          WO-A-89/05930
US-A- 4 963 804

• PATENT ABSTRACTS OF JAPAN vol. 11, no. 48
(M-561)(2495) 13 Février 1987 & JP-A-61 211 548
• PATENT ABSTRACTS OF JAPAN vol. 8, no. 76
(M-288)(1513) 9 Avril 1984 & JP-A-58 221 038
• PATENT ABSTRACTS OF JAPAN vol. 11, no. 380
(M-650)(2827) 11 Décembre 1987 & JP-A-62 151
639

## Description

L'invention est relative à un dispositif d'atténuation des vibrations périodiques d'une structure mécanique.

Lorsqu'une structure mécanique est le siège de vibrations, ou de bruits, périodiques, une méthode générale connue consiste à engendrer et appliquer à cette structure mécanique, au moyen d'un actionneur, une vibration ou bruit de compensation, en opposition de phase avec les bruits ou vibrations d'origine. Cette méthode est appelée méthode d'antivibration active.

La réalisation de la commande qui produira l'amortissement des vibrations ou des bruits, c'est-à-dire la génération de la vibration ou bruit de compensation, est délicate, car de la précision en amplitude et en phase de celle-ci, par rapport à la vibration d'origine, dépend le degré d'amortissement ou l'annulation de celle-ci finalement obtenu.

Les dispositifs actuellement proposés, pour les raisons précédemment indiquées, ne donnent pas entière satisfaction.

Parmi ces derniers, deux modes opératoires ont été proposés.

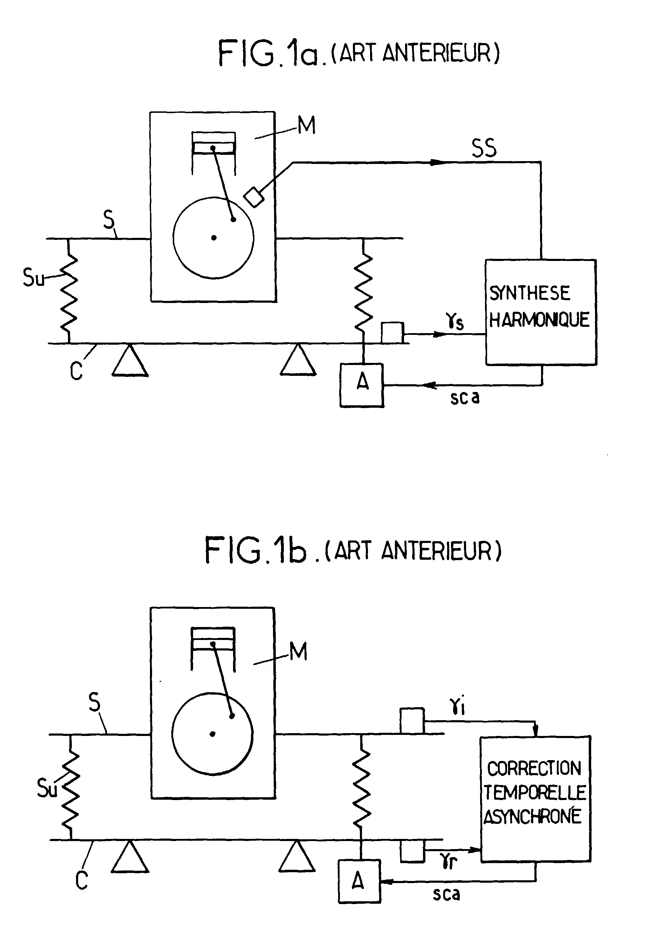

Un premier mode opératoire, illustré par la figure 1a, consiste à synthétiser la vibration de compensation, harmonique par harmonique, en utilisant un signal de synchronisation issu de la vibration périodique elle-même.

Un tel mode opératoire a été décrit notamment par la demande de brevet internationale WO 83/01525 publiée le 28 avril 1983.

Dans un tel mode opératoire, le calibrage, en amplitude et en phase, des harmoniques est effectué de façon à annuler le signal d'accélération $\gamma$ mesuré au moyen d'un accéléromètre placé sur la structure à protéger.

L'inconvénient du mode opératoire précité est que celui-ci n'est pas adapté aux phénomènes de vibrations et de bruits non stationnaires, car le temps de convergence du système est relativement long ; en outre, et pour cette raison, la synthèse de la vibration de compensation ne peut être effectuée que sur un nombre discret restreint d'harmoniques, ce qui nuit à la précision en amplitude et en phase de la vibration de compensation reconstituée, par rapport à la vibration d'origine, et finalement au degré d'atténuation de celle-ci.

Le deuxième mode opératoire proposé jusqu'à ce jour consiste à ne faire aucune hypothèse sur la nature ou la forme d'onde de la vibration d'origine, celle-ci, ainsi que représenté en figure 1b, étant détectée et mesurée au moyen d'un deuxième capteur délivrant un signal représentatif de l'accélération incidente $\gamma i$. Ce signal est traité par un filtre auto-adaptatif à coefficients variables, F.A.A. délivrant la vibration de compensation, la détection et la mesure de l'accélération résiduelle $\gamma r$ permettant alors d'adapter les coefficients du filtre afin de rendre le signal de commande de la vibration de compensation minimum. Le mode opératoire précité met donc en oeuvre un mode de traitement temporel.

Un inconvénient de ce mode opératoire est que tous les signaux engendrés par les capteurs sont en définitive traités par le système, en l'absence de synchronisation sur le caractère périodique de la vibration d'origine. Un tel inconvénient est susceptible de conduire à des problèmes majeurs lorsque, par exemple, le niveau de bruit est important, ou lorsque les modes de résonance propres de la structure mécanique, lorsque celle-ci est suspendue, sont excités, le dispositif correspondant n'étant en aucun cas en mesure d'effectuer une discrimination correspondante en vue du traitement de la seule vibration d'origine.

Enfin, on a également proposé, dans le document EP 0 348 087 publié le 27/12/1989, de compenser le bruit de rotation d'un gyroscope à laser par la synthèse d'un signal antivibration obtenue par la mise en résonance d'une contre-masse. Un tel système ne peut donner satisfaction que pour assurer la compensation d'une vibration purement sinusoïdale, en l'absence de tout bruit.

La présente invention a pour objet de remédier à l'ensemble des inconvénients précités.

Un autre objet de la présente invention est également la mise en oeuvre d'un dispositif d'amortissement ou d'annulation des vibrations périodiques d'une structure mécanique dont le mode opératoire réunit en outre les avantages des deux modes opératoires précités de l'art antérieur.

Un autre objet de la présente invention est enfin, la mise en oeuvre d'un dispositif d'amortissement ou d'annulation des vibrations périodiques d'une structure mécanique d'une grande précision, l'amplitude de la vibration résiduelle de la structure mécanique, grâce à la mise en oeuvre du dispositif selon l'invention, pouvant être rendue inférieure à 10 % de l'amplitude de la vibration d'origine.

Le dispositif d'amortissement des vibrations périodiques d'une structure mécanique, objet de la présente invention, comprend au moins un transducteur détecteur de ces vibrations délivrant un signal détecté, un détecteur de la périodicité de ces vibrations délivrant un signal de synchronisation, un circuit de commande et un transducteur générateur de vibrations de compensation appliquées à la structure mécanique pour compenser les vibrations périodiques ou vibration d'origine.

Il est remarquable en ce que le circuit de commande comporte au moins un circuit de filtrage synchrone du signal détecté, commandé par le signal de synchronisation, le circuit de filtrage délivrant un signal filtré dont le spectre de fréquence ne comporte que la fréquence fondamentale instantanée du signal détecté et/ou les fréquences harmoniques de celle-ci, et un circuit de régulation du signal filtré recevant ce dernier et délivrant un signal de commande d'antivibration appliqué au transducteur générateur pour engendrer sur cette structure mécanique une vibration de compensation, de façon à minimiser l'amplitude du signal détecté.

Le dispositif objet de l'invention trouve application à la stabilisation des machines tournantes de tout type dans lesquelles l'existence d'un balourd résiduel communique à la structure mécanique de celle-ci une vibration d'origine, périodique, correspondante.

Une description plus détaillée du dispositif objet de l'invention sera donnée dans la description ci-après et dans les dessins dans lequel outre les figures 1a et 1b, relatives à l'art antérieur,

- la figure 2a représente un schéma synoptique général du dispositif d'amortissement des vibrations périodiques d'une structure mécanique objet de la présente invention,
- la figure 2b représente un diagramme de transmission et de déphasage, en fonction de la fréquence, d'un filtre de type passe-bas à capacités commutées,
- la figure 3 représente un mode de réalisation avantageux non limitatif du dispositif objet de l'invention, conformément au schéma de principe de la figure 2a,
- la figure 4a représente un mode de réalisation préférentiel du dispositif d'amortissement des vibrations périodiques d'une structure mécanique objet de la présente invention,
- la figure 4b représente un diagramme de phase, dans le plan de Fresnel, des paramètres physiques essentiels, ou de leurs signaux représentatifs, mis en oeuvre par le mode de réalisation préférentiel de la figure 4a,
- la figure 4c représente un détail de réalisation, dans un mode avantageux non limitatif, d'un circuit de commande de phase permettant d'assurer une régulation de la phase des paramètres physiques, ou de leurs signaux représentatifs, de la figure 4b,
- la figure 5 représente une variante de réalisation du dispositif représenté en figure 4a dans lequel, lorsque la vibration périodique d'origine est très éloignée d'une vibration sinusoïdale, une pluralité d'harmoniques d'un signal de synchronisation, représentatif du fondamental de cette vibration d'origine, est mise en oeuvre pour reconstituer le signal de compensation antivibration.

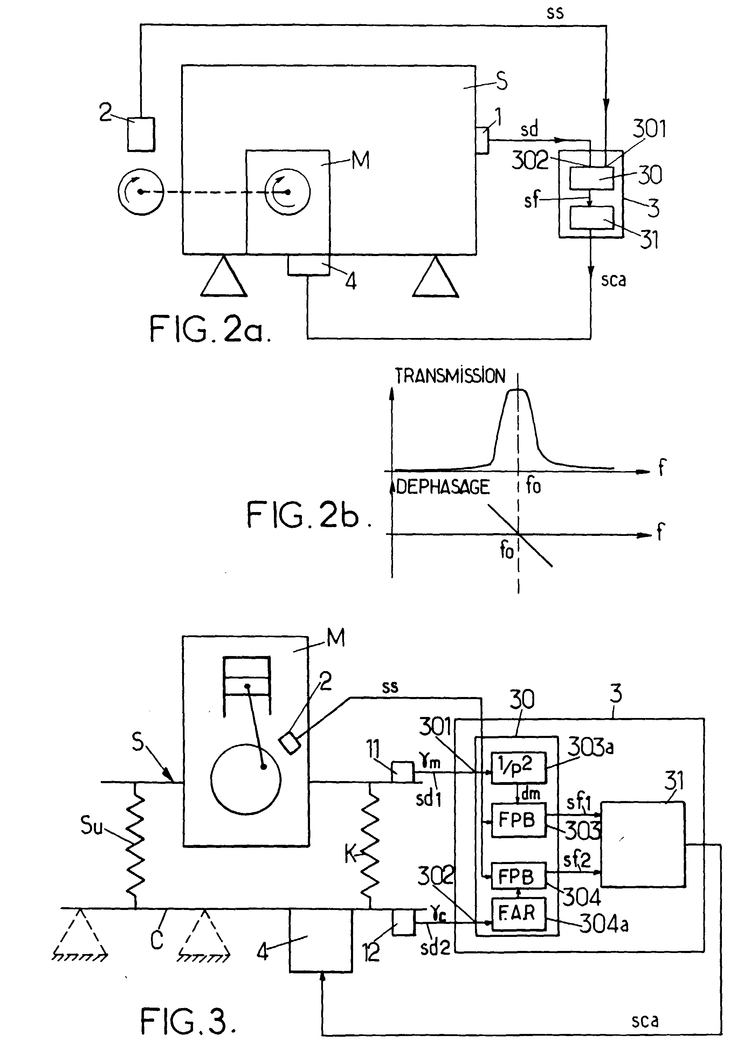

Une description plus détaillée d'un dispositif d'amortissement des vibrations (ou bruits) périodiques d'une structure mécanique, objet de la présente invention, sera donnée en liaison avec la figure 2a.

Sur la figure précitée, on notera que la structure mécanique est notée S, cette structure mécanique étant, par exemple, et de manière non limitative, fixe ou mobile, et comportant une machine tournante, notée M. On notera en particulier que la machine tournante M peut être constituée par tout type de machine tel qu'un moteur électrique, un moteur à combustion interne, ou un alternateur par exemple.

Le dispositif selon l'invention, ainsi que représenté en figure 2a, comprend au moins un transducteur 1, détecteur des vibrations précitées et délivrant un signal détecté noté sd, un détecteur 2 de la périodicité de ces vibrations délivrant un signal de synchronisation noté ss, un circuit de commande 3 et un transducteur 4 générateur de vibrations de compensation appliquées à la structure mécanique S pour compenser les vibrations périodiques d'origine.

Conformément à un aspect particulièrement avantageux du dispositif, objet de la présente invention, celui-ci comprend, ainsi que représenté en figure 2a, un circuit de commande 3 comportant un circuit de filtrage synchrone, noté 30, du signal détecté sd, ce circuit étant commandé par le signal de synchronisation ss, de façon à délivrer un signal filtré sf, dont le spectre de fréquence ne comporte que la fréquence fondamentale instantanée du signal détecté sd et/ou les fréquences harmoniques de celle-ci.

En outre, le circuit de commande 3 comprend un circuit 31 de régulation du signal filtré sf recevant ce dernier et délivrant un signal de commande d'antivibrations, noté sca, appliqué au transducteur 4 générateur, de façon à minimiser l'amplitude du signal détecté sd.

Selon un aspect particulièrement avantageux du dispositif objet de la présente invention, le circuit de filtrage synchrone 30 est constitué par au moins un filtre à capacités commutées, ce filtre recevant sur son entrée 301 de commande de commutation le signal de synchronisation ss délivré par le détecteur de périodicité 2, et sur une entrée 302 de filtrage, le signal détecté sd.

On notera que le circuit de filtrage synchrone 30 est en fait constitué par au moins un filtre à capacités commutées de type filtre passe-bande et dont la fréquence centrale, commandée par le signal de synchronisation ss, correspond exactement à la fréquence instantanée des vibrations d'origine ou bruits produits par la machine tournante M au cours du fonctionnement de celle-ci. On notera que la propriété des filtres à capacités commutées est que leur caractéristique en fréquence n'est pas figée, au contraire des filtres conventionnels, cette fréquence centrale instantanée étant liée très précisément à la fréquence du signal de synchronisation ss selon un rapport constant, lequel peut généralement être compris entre 10 et 1000. Ainsi, la fréquence centrale instantanée du filtre à capacités commutées évolue avec les variations de régime de la machine tournante M, et le signal transmis par le filtre, c'est-à-dire le signal filtré sf, ne contient que les vibrations produites par la machine, quel que soit le régime de celle-ci. Ainsi, le bruit et les modes propres non corrélés avec les vibrations du moteur ou machine M sont rejetés.

Sur la figure 2b, on a représenté un diagramme du coefficient de transmission du filtre en fonction de la fréquence pour une valeur instantanée f0 de la fréquence centrale de celui-ci et du déphasage introduit par ce type de filtre au niveau de la fréquence centrale f0 instantanée précitée, en fonction de la fréquence, ce déphasage étant sensiblement linéaire et appliqué au signal détecté sd pour délivrer le signal filtré sf.

On notera bien sûr que les filtres à capacités commutées peuvent être remplacés par un ensemble de filtrage numérique équivalent, comportant successivement un convertisseur analogique numérique, un processeur numérique et un convertisseur numérique-analogique.

Une description plus détaillée d'un mode de réalisation avantageux non limitatif d'un dispositif conforme à l'objet de la présente invention sera décrit en liaison avec la figure 3 dans le cas où la structure mécanique S, siège des vibrations périodiques ou bruits d'origine, comporte une partie source des vibrations représentée de manière schématique à titre purement illustratif sous forme d'un moteur à explosion M, lequel est supporté par une partie support ou châssis C, la structure mécanique S étant reliée au châssis C par l'intermédiaire d'une suspension SU. On notera d'ailleurs que le châssis C peut être lui-même fixe ou mobile, le moteur à combustion interne M étant alors constitué par le moteur à explosion d'un véhicule automobile, par exemple.

Conformément à un aspect particulièrement avantageux du dispositif objet de la présente invention, ainsi que représenté en figure 3, le transducteur détecteur 1 est formé par un premier transducteur détecteur 11, mécaniquement solidaire de la partie source ou moteur M des vibrations d'origine. On notera que le détecteur 11 délivre un premier signal détecté noté sd1.

En outre, un deuxième transducteur détecteur 12 est prévu, ce dernier étant mécaniquement solidaire du châssis C et délivrant un deuxième signal détecté sd2.

Dans le cas précédemment mentionné, le circuit 30 de filtrage synchrone est alors formé par un premier 303 et un deuxième 304 filtre à capacités commutées recevant le premier sd1, respectivement deuxième sd2, signal détecté, et délivrant un premier sf1, respectivement un deuxième sf2, signal filtré au circuit de régulation 31.

Toutefois, ainsi qu'on l'a d'ailleurs représenté en figure 3, les premier et deuxième transducteurs 11, 12, peuvent avantageusement être constitués par des accéléromètres et les signaux détectés correspondants sd1 et sd2 sont délivrés au premier 303, respectivement deuxième 304, filtre à capacités commutées, par l'intermédiaire d'un double intégrateur, noté 303a, respectivement par l'intermédiaire d'un filtre anti-repliement noté 304 a. Ainsi, le premier 303 filtre à capacités commutées reçoit un signal homogène au déplacement de la structure S, le second 304, un signal homogène à l'accélération du châssis C.

En ce qui concerne le circuit de régulation 31 du signal filtré recevant les signaux filtrés sf1 et sf2, on notera que ce circuit de régulation 31 délivrant un signal de commande d'antivibration sca comprend au moins un circuit, noté CG, de contrôle de gain du signal sf1 en fonction de l'amplitude du signal sf2.

On notera que d'une manière générale, le circuit de contrôle de gain CG pourra comprendre un amplificateur 310 à gain (atténuation) ajustable recevant sur son entrée à gain variable le premier signal filtré sf1, et sur son entrée de commande de gain, un signal proportionnel à l'amplitude du deuxième signal filtré sf2, la sortie de l'amplificateur à gain variable 310 délivrant le signal de commande d'antivibration sca au transducteur 4 générateur de vibrations de compensation, de façon que l'amplitude du deuxième signal filtré sf2 soit rendue minimale.

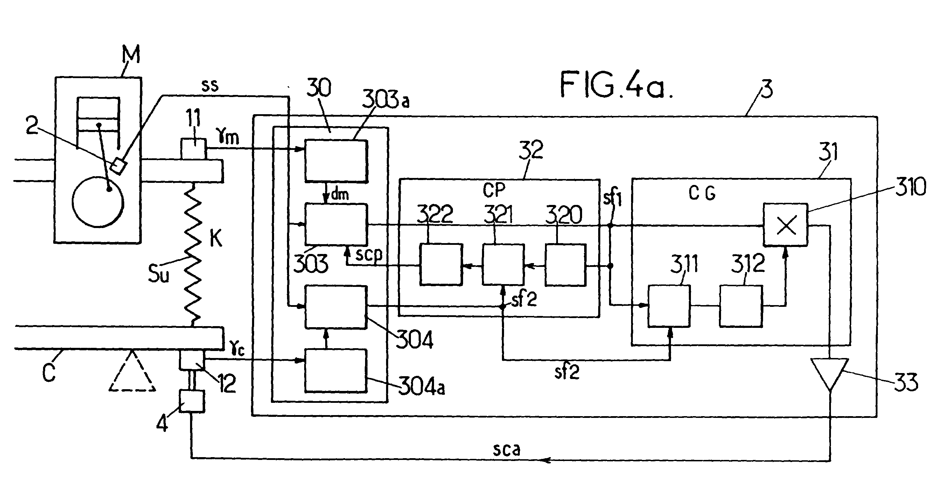

Une description plus détaillée d'un mode de réalisation préférentiel du dispositif d'amortissement des vibrations périodiques d'une structure mécanique, objet de la présente invention, dans le cas où la structure mécanique, de même que précédemment décrite dans le cadre de la figure 3 précitée, comporte une partie source des vibrations supportée par une partie support ou châssis C, sera maintenant donnée en liaison avec la figure 4a.

Dans la figure 4a, les mêmes références désignent les mêmes éléments que ceux déjà décrits dans la figure 3.

Ainsi qu'on le remarquera à l'observation de la figure 4a précitée, le circuit de régulation du signal filtré recevant le signal filtré et délivrant un signal de commande d'antivibrations comprend, en outre, un circuit de contrôle de phase, noté CP, permettant de corriger le déphasage entre le premier et le deuxième signal détecté et/ou le premier et le deuxième signal filtré.

Ainsi qu'on l'observera sur la figure 4a, le circuit de contrôle de phase CP portant la référence 32 est, par exemple, placé en amont du circuit de contrôle de gain 31 précédemment décrit dans la description.

Le mode de réalisation de la figure 4a est donné à titre d'exemple non limitatif dans le cas où le moteur M est un moteur à quatre cylindres en ligne d'un véhicule automobile, par exemple. Pour une fréquence de rotation N du moteur, le fondamental des vibrations émises a une fréquence de 2N. Le détecteur 2 de la périodicité des vibrations peut alors être avantageusement réalisé par un détecteur de type incrémental, un détecteur optique par exemple, ou même, le cas échéant, par un détecteur magnétique permettant de détecter les dents de la roue du vilebrequin du moteur. Pour une roue comportant 200 dents, et donc délivrant 200 impulsions par tour du moteur, le détecteur 2 de la périodicité des vibrations délivre 100 impulsions par période de vibrations. Dans un tel cas, les filtres à capacités commutées 303 et 304 peuvent avoir avantageusement une bande transmise centrée sur 1/100 de la fréquence du signal de synchronisation ss. A titre d'exemple non limitatif, on pourra utiliser des filtres à capacités commutées commercialisés par la société NATIONAL SEMI-CONDUCTORS sous la référence LMF 100 ou LMF 120, ou par la société LINEAR TECHNOLOGY sous la référence LT 1060.

On notera que, ces filtres étant des systèmes échantillonnés, on pourra si nécessaire ajouter un filtrage anti-repliement à l'entrée des filtres à capacités commutées précités dans le cas où le filtage passe-bas assuré par la double intégration en 303a, ne suffit pas pour assurer le filtrage anti-repliement du spectre échantillonné.

De manière particulièrement avantageuse, ainsi qu'on l'a représenté en figure 4a, le circuit de gain 31 comprend avantageusement un circuit démodulateur 311, recevant sur ses deux entrées de démodulation le premier et le deuxième signal filtré, sf1, respectivement sf2, et délivrant un signal démodulé. En outre, le circuit de contrôle de gain comprend un circuit intégrateur 312, recevant le signal démodulé délivré par le circuit démodulateur 311, et assurant le filtrage des produits d'intermodulation et la compensation d'erreur en régime permanent du signal démodulé. Le circuit intégrateur 312 a sa sortie connectée à l'entrée de commande de gain de l'amplificateur à gain ajustable 310, lequel reçoit sur son entrée, ainsi que précédemment décrit dans le cadre de la figure 3b, le premier signal filtré sf1.

Le circuit de contrôle de gain GC peut également être réalisé sous forme numérique, l'amplificateur 310 étant remplacé par un convertisseur numérique-analogique multiplieur formant un potentiomètre numérique, le signal sf1 étant multiplié ou atténué par un coefficient envoyé sous forme numérique par un ensemble convertisseur analogique numérique/microprocesseur connecté en sortie du circuit intégrateur 312.

En outre, ainsi qu'on l'observera sur la figure 4a, le circuit de contrôle de phase CP, comprend un comparateur de phase 321 recevant sur une première entrée de comparaison le premier signal filtré sf1, par l'intermédiaire d'un circuit différenciateur 320, et respectivement directement, sur une deuxième entrée de comparaison, le deuxième signal filtré sf2. Le circuit de contrôle de phase CP délivre un signal de commande de correction de phase au premier filtre à capacités commutées 303, par l'intermédiaire d'un circuit intégrateur 322.

On notera en outre que la sortie du circuit de contrôle de gain 31, et en particulier, de l'amplificateur à gain ajustable 310, est reliée à l'actionneur 4 par l'intermédiaire d'un amplificateur de puissance 33, lequel peut être constitué par tout type d'amplificateur, tel qu'amplificateur à thyristor, ou analogue, permettant d'assurer l'alimentation de l'actionneur 4.

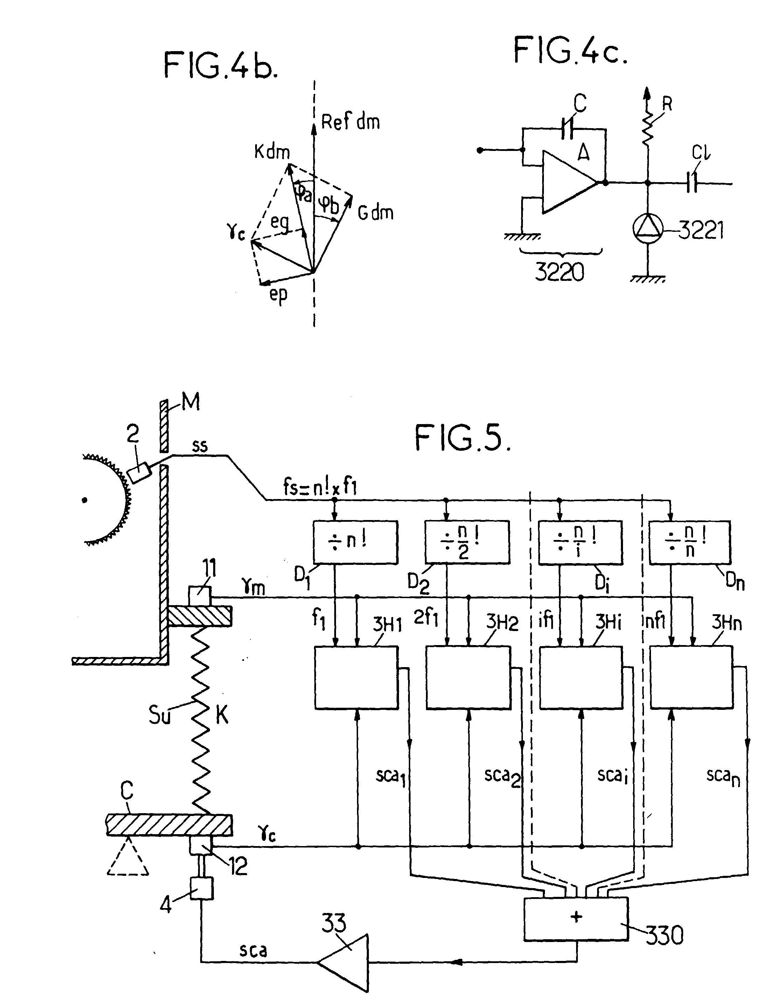

Le fonctionnement de l'ensemble tel que représenté en figure 4a sera explicité en liaison avec la figure 4b et avec la figure 4c.

Le signal de commande antivibration sca est délivré à l'actionneur 4, lequel le transforme en force sur la structure ou châssis C, en opposition avec la force due à la vibration d'origine, ou bruit d'origine, transmise directement par la suspension SU. Pour que l'atténuation soit efficace, il faut que la contreforce, c'est-à-dire la force engendrée par l'actionneur 4, soit opposée en module et en phase à la force engendrée par la vibration ou bruit d'origine. En conséquence, afin de maintenir un haut degré d'atténuation en régime permanent, et ce malgré les dérives, il est nécessaire que le système soit auto-adptatif.

On notera que, de manière particulièrement avantageuse, l'organe actif de l'actionneur 4 est placé au niveau du deuxième transducteur détecteur 12.

On désigne par K la constante de raideur de la suspension SU, par $\gamma m$ le signal délivré de type accélération par le premier détecteur 11, $\gamma m$ étant représentatif de l'accélération transmise par la machine tournante M à la structure S, par $\gamma c$ le signal délivré par le deuxième détecteur 12, $\gamma c$ étant représentatif de l'accélération du châssis C.

La figure 4b représente, dans le plan de Fresnel, le diagramme des forces appliquées par l'actionneur 4 et par la suspension SU sur le châssis C, au niveau du deuxième capteur détecteur 12. Dans cette figure, dm est la référence de phase donnée par le déplacement du moteur M au niveau du premier capteur détecteur 11. La force transmise par la suspension SU a alors pour valeur K.dm, mais en raison de la présence d'un léger amortissement, le vecteur représentatif de cette force a une avance de phase $\varphi a$ telle que représentée en figure 4b.

La force engendrée par le dispositif actionneur 4 a pour valeur G.dm, mais celle-ci, à cause des délais de traitement dûs aux fonctions de transfert du circuit de filtrage 30 de contrôle de phase CP 32 et du circuit de contrôle de gain CG 31, présente un retard $\varphi b$ tel que représenté en figure 4b.

La force résultante mesurée par le deuxième transducteur détecteur 12, proportionnelle à $\gamma c$, vaut K.dm + G.dm.

Pour que cette dernière soit nulle, il faut, d'une part, que G = -K en module, et, d'autre part, que les phases soient opposées soit $\varphi b = -\varphi a$. Si ces deux égalités ne sont pas vérifiées, il existe une vibration résiduelle $\gamma c$, laquelle se décompose en une composante, notée eg, en phase avec la force transmise par la suspension, K.dm, cette composante étant due à l'erreur sur le gain, et une composante perpendiculaire à cette même force transmise par la suspension K.dm, notée ep, et due à l'erreur sur la phase.

Les conditions de gain et de phase précitées peuvent alors être réalisées au moyen du circuit de contrôle de phase CP 32 et du circuit de contrôle de gain CG 31 précédemment décrits dans la description.

Chacun des circuits précités comprend un détecteur mesurant l'erreur, constitué respectivement par le démodulateur 311 et par le démodulateur 321, ainsi qu'un moyen d'action modifiant le gain, c'est-à-dire l'amplificateur à gain ajustable 310 dans le cas du circuit de contrôle de gain 31, et respectivement la phase, c'est-à-dire le circuit intégrateur 322, lequel agit sur le filtre à capacités commutées 303, dans le cas du circuit de contrôle de phase CP 32. On notera que les circuits détecteurs 311 et 321 peuvent être constitués par un démodulateur synchrone, lequel permet d'extraire, dans un signal donné, la composante qui est en phase avec une entrée de référence.

L'entrée de référence, dans le cas du démodulateur 311, est constituée par le premier signal filtré sf1, alors que pour le démodulateur synchrone 321, l'entrée de référence est constituée par le signal filtré sf1, après différenciation par le circuit différenciateur 320, afin d'assurer la rotation de phase de 90° permettant de mesurer la composante en quadrature ep représentée sur la figure 4b.

On notera par contre que le signal démodulé par le signal de référence de chacun des deux démodulateurs synchrones précités est constitué, tant pour le démodulateur 311 que pour le démodulateur 321, par le deuxième signal filtré sf2. On notera que l'utilisation de démodulateurs synchrones a pour effet de rejeter toute composante perpendiculaire à l'entrée de référence, ou toute autre fréquence, ou bruit. A titre d'exemple non limitatif, les démodulateurs synchrones précités peuvent être réalisés par un multiplieur effectuant le produit du signal soumis à démodulation, c'est-à-dire le deuxième signal filtré sf2, et de l'entrée de référence constituée par le premier signal filtré sf1, respectivement ce premier signal filtré sf1 après dérivation par le circuit différentiateur 320. On peut utiliser par exemple les multiplieurs commercialisés sous la référence AD 534 par la société ANALOG DEVICES, ou les multiplieurs commercialisés sous la référence MC 1595 par la société MOTOROLA. On notera bien sûr que d'autres circuits intégrés assurant directement la fonction de démodulation peuvent être utilisés, par exemple le circuit Analog Devices AD 630. Bien entendu, pour la réalisation des démodulateurs synchrones 311 et 321, on pourra utiliser des circuits de nature identique, la seule différence de mode opératoire des détecteurs synchrones résidant en ce que la référence pour le contrôle de la phase doit être un signal perpendiculaire à la référence pour le contrôle du gain, soit en quadrature de phase. Ce signal est délivré par le circuit différenciateur 320 à partir du premier signal filtré sf1, utilisé comme référence pour le circuit de contrôle de gain. Un circuit intégrateur peut d'ailleurs être utilisé en lieu et place du circuit différenciateur 320.

D'une manière générale, on comprendra que l'action sur la phase est obtenue en agissant légèrement sur le rapport fréquence de synchronisation/fréquence centrale du filtre passe-bande, par modification des caractéristiques électriques de composants du filtre, résistances ou capacités. La courbe du filtre représentée en figure 2 montre qu'autour de la valeur centrale un décalage en fréquence se traduit par une variation de phase quasi-linéaire.

Une description plus détaillée du circuit de correction de phase dans un mode de réalisation particulier non limitatif sera donnée en liaison avec la figure 4c.

Selon la figure précitée, le circuit 322 de correction de phase comprend un circuit intégrateur, noté 3220, comportant par exemple un amplificateur opérationnel et une capacité notée C montés en intégrateur de type intégrateur de Miller, le circuit intégrateur précité étant suivi d'une diode à capacité variable 3221, connectée à une résistance R de polarisation et à une capacité de liaison notée Cl.

Selon le mode de réalisation de la figure 4c, la capacité de liaison Cl peut avantageusement être connectée à une ou plusieurs capacités non commutées du filtre à capacités commutées, la diode à capacité variable 3221 étant alors connectée en parallèle sur la capacité non commutée du filtre à capacités commutées précité.

Sur variation de la tension de sortie délivrée par l'intégrateur 3220, la tension de polarisation de la diode 3221 à capacité variable varie, et la capacité équivalente correspondante, ce qui permet de faire varier la capacité équivalente non commutée du filtre à capacités commutées, et finalement le déphasage correspondant pour la fréquence centrale fO représenté en figure 2, pour compenser le déphasage précité, selon la loi de variation linéaire représentée sur cette figure.

On notera que le mode d'action sur la phase décrit précédemment n'est pas limitatif. Il est en outre possible d'agir sur la phase par une commande de la fréquence de synchronisation, c'est-à-dire par le signal ss délivré au filtre à capacités commutées 303 correspondant.

Bien entendu, le contrôle de la phase peut être réalisé en technologie numérique.

Dans un tel cas, un convertisseur numérique analogique multiplieur peut être utilisé pour ajuster la fréquence de la bande par rapport à la fréquence de synchronisation du filtre, ce convertisseur numérique analogique multiplieur étant piloté par un microprocesseur et par un convertisseur analogique numérique recevant le signal d'erreur de phase. Dans ce but, le convertisseur numérique analogique peut être supprimé lorsque le filtre utilisé est un filtre directement programmable par microprocesseur. En outre, le filtrage, la démodulation et tout le traitement des signaux $\gamma$m et $\gamma$c jusqu'à la sortie vers l'actionneur 4 peuvent être réalisés en technologie numérique, moyennant une puissance de calcul importante.

On notera enfin la sortie des démodulateurs synchrones par les circuits de type passe-bas d'un gain élevé, voire un intégrateur 312 et 322, ce qui apporte deux avantages : suppression de la composante à haute fréquence des démodulateurs et erreur nulle en régime permanent.

Une description plus détaillée d'une variante de réalisation du dispositif objet de la présente invention permettant d'obtenir une très grande précision de reconstitution du signal de commande d'amortissement sca et, en définitive, une atténuation de la vibration d'origine inférieure à 10 % de celle-ci, sera décrit en liaison avec la figure 5. Le mode de réalisation précité est particulièrement avantageux dans le cas où les vibrations d'origine sont constituées par un signal périodique non sinusoïdal. Dans un tel cas, le dispositif tel que décrit précédemment en figure 4a, par exemple, peut alors être dupliqué en fonction du nombre de fréquences harmoniques constitutives du signal périodique non sinusoïdal précédemment cité. Dans ce cas, le seul changement à apporter consiste uniquement en la modification de la fréquence du signal de synchronisation ss des filtres à capacités commutées correspondants. Ainsi, si f1 désigne la fréquence du signal de synchronisation envoyée à l'étage correspondant destiné à traiter le fondamental de la vibration périodique précitée, un signal de synchronisation de fréquence 2.f1 permet de traiter l'harmonique 2 et ainsi de suite, les circuits correspondants étant identiques.

Ainsi, chaque circuit de commande, noté 3Hi, où i désigne le rang de l'harmonique correspondant, comporte un circuit de filtrage synchrone 30, un circuit de contrôle de gain 31 et un circuit de contrôle de phase 32, identiques à ceux décrits en liaison avec la figure 4a, l'amplificateur de puissance 33 étant commun à l'ensemble des circuits 3Hi. Les fréquences f1, f2... fn peuvent être obtenues de la façon suivante : chaque filtre à capacités commutées de rang i reçoit le signal de synchronisation ss à fréquence fs par l'intermédiaire d'un diviseur Di par $\frac{n!}{i}$.

Chaque circuit de filtrage synchrone correspondant de rang i délivre respectivement le signal filtré correspondant sf1i, sf2i. Les circuits de régulation de rang i correspondants sont connectés en parallèle sur le transducteur 4 générateur, par l'intermédiaire d'un sommateur 330 attaquant l'amplificateur de puissance 33.

On notera ainsi que chaque circuit de commande 3Hi travaille ainsi indépendamment des autres dont le rang est différent.

On a ainsi décrit un dispositif d'amortissement des vibrations périodiques d'une structure mécanique particulièrement performant, dans la mesure où le dispositif objet de la présente invention permet un mode opératoire susceptible de supprimer les inconvénients des dispositifs de l'art antérieur actuellement connus. On notera en particulier que le domaine d'application du dispositif d'amortissement de vibrations périodiques d'une structure mécanique selon l'invention peut être utilisé dans un domaine très large d'applications pour le supportage de tout type de machine vibrante. On notera que, le cas échéant, le dispositif objet de la présente invention peut avantageusement être appliqué au supportage et à l'atténuation des vibrations périodiques d'une structure mécanique selon trois directions de référence, les premier et deuxième transducteurs détecteurs 11 et 12, constitués alors, par exemple, par des accéléromètres, étant dupliqués en trois et répartis selon des directions de référence, par exemple celles d'un trièdre de référence. Dans ce cas, à chaque couple de premier et deuxième transducteur détecteur 11, respectivement 12, est alors associé bien entendu un circuit de commande 3 tel que représenté en figure 4a, ou une pluralité de circuits de commande 3Hi tels que représentés en figure 5.

**Revendications**

1. Dispositif d'amortissement des vibrations périodiques d'une structure mécanique(S), comprenant au moins un transducteur détecteur (1) de ces vibrations délivrant un signal détecté (Sd), un détecteur (2) de la périodicité de ces vibrations délivrant un signal de synchronisation (SS), un circuit de commande (3) et un transducteur générateur (4) de vibrations de compensation appliquées à ladite structure mécanique (S) pour compenser les vibrations périodiques, caractérisé en ce que ledit circuit de commande (3) comporte au moins :

   - un circuit de filtrage synchrone (30) dudit signal détecté (Sd), commandé par ledit signal de synchronisation (SS), ledit circuit de filtrage (30) délivrant un signal filtré (Sp) dont le spectre de fréquence ne comporte que la fréquence fondamentale instantanée du signal détecté (Sd) et/ou les fréquences harmoniques de celle-ci,
   - un circuit de régulation (31) du signal filtré (Sp) recevant ledit signal filtre (Sp) et délivrant un signal de commande d'antivibration (Sca), appliqué audit transducteur générateur (4), de façon à minimiser l'amplitude du signal détecté (Sd).

2. Dispositif selon la revendication 1, caractérisé en ce que ledit circuit de filtrage synchrone (30) est constitué par au moins un filtre à capacités commutées (303, 304), de type passe-bande, ledit filtre à capacités commutées recevant sur son entrée de commande de commutation ledit signal de synchronisation (SS) et sur son entrée de filtrage ledit signal détecté (Sd).

3. Dispositif selon la revendication 1, caractérisé en ce que, ladite structure mécanique (S), siège des vibrations périodiques, comportant une partie source (M) desdites vibrations supportée par une partie support, ou châssis (C) par l'intermédiaire d'une suspension (Su), ledit transducteur détecteur (1) est formé par :

   - un premier transducteur détecteur (11), mécaniquement solidaire de ladite partie source (M) desdites vibrations et délivrant un premier signal détecté (Sd1), homogène à un déplacement,
   - un deuxième transducteur détecteur (12), mécaniquement solidaire dudit châssis (C) et délivrant un deuxième signal détecté (Sd2) homogène à une accélération, ledit circuit de filtrage synchrone (30) étant formé par un premier (303) et un deuxième (304) filtre passe-bande à capacités commutées recevant le premier (Sd1), respectivement deuxième (Sd2), signal détecté et délivrant un premier (Sf1) respectivement deuxième (Sf2) signal filtré audit circuit de régulation (31).

4. Dispositif selon la revendication 3, caractérisé en ce que lesdits premier (11) et deuxième (12) transducteurs sont constitués par des accéléromètres, les signaux détectés étant délivrés audit premier (303), respectivement deuxième (304), filtre à capacités commutées par l'intermédiaire d'un double intégrateur (303a), respectivement un filtre anti-repliement (304a).

5. Dispositif selon les revendications 3 et 4, caractérisé en ce que le circuit de contrôle de gain (CG) comprend :

- un amplificateur (310) à gain (atténuation) ajustable recevant sur son entrée à gain variable ledit premier signal filtré (Sf1) et sur son entrée de commande de gain un signal proportionnel à l'amplitude du deuxième signal filtré (Sf2), la sortie dudit amplificateur (310) à gain variable délivrant ledit signal de commande d'antivibration (Sca) audit transducteur (4) générateur de vibrations de compensation, de façon que l'amplitude du deuxième signal filtré (Sf2) soit minimale.

6. Dispositif selon la revendication 5, caractérisé en ce que ledit circuit de régulation (31) du signal filtré recevant le signal filtré et délivrant un signal de commande d'antivibration comprend en outre au moins un circuit de contrôle de phase (CP32) permettant de corriger le déphasage entre le premier (Sd1) et le deuxième (Sd2) signal détecté et/ou le premier (Sf1) et le deuxième (Sf2) signal filtré.

7. Dispositif selon les revendications 5 et 6, caractérisé en ce que le circuit de contrôle de gain (CG) produisant ledit signal proportionnel à l'amplitude du deuxième signal filtré (Sf2) comprend en cascade :

- un circuit démodulateur (311) recevant sur ses deux entrées de démodulation le premier (Sf1) et le deuxième (Sf2) signal filtré et délivrant un signal démodulé,
- un circuit intégrateur (312) recevant le signal démodulé et assurant le filtrage des produits d'intermodulation et la compensation d'erreur en régime permanent dudit signal demodulé, le circuit intégrateur (312) ayant sa sortie connectée à l'entrée de commande de gain de l'amplificateur à gain ajustable (310).

8. Dispositif selon la revendication 6, caractérisé en ce que le circuit de contrôle de phase (CD32) comporte un comparateur de phase (321) recevant sur une première et une deuxième entrée de comparaison le premier (Sf1), par l'intermédiaire d'un circuit différentiateur (320), respectivement deuxième (Sf2), signal filtré et délivrant un signal de commande de correction de phase audit premier filtre à capacités commutées (303) par l'intermédiaire d'un circuit intégrateur (322), la correction de phase étant obtenue par décalage de la fréquence centrale instantanée du filtre.

9. Dispositif selon la revendication 8, caractérisé en ce que ledit circuit intégrateur (322) est suivi d'une diode à capacité variable (3221) connectée en parallèle sur une capacité non commutée dudit premier filtre à capacités commutées.

10. Dispositif selon la revendication 1 précédente, caractérisé en ce que dans le cas où lesdites vibrations sont constituées par un signal périodique non sinusoïdal, ledit dispositif comporte une pluralité de circuits de commande identiques (3Hi) connectés en parallèle, où i représente le rang de l'harmonique traité, chaque circuit de commande (3Hi) recevant les premier (Sd1) et deuxième (Sd2) signal détecté, et le circuit de commande relatif à l'harmonique de rang i recevant comme signal de synchronisation un signal de synchronisation correspondant dont la fréquence est multiple, dans le rapport i, de celle du signal de synchronisation reçu par le circuit de commande relatif au fondamental de la vibration à atténuer, chaque circuit de commande (3Hi) étant relié à l'actionneur par l'intermédiaire d'un sommateur (330) attaquant un amplificateur de puissance (33).

**Patentansprüche**

1. Vorrichtung zum Dämpfen von periodischen Schwingungen einer mechanischen Struktur (S), enthaltend wenigstens einen Detektor-Wandler (1), der diese Schwingungen erfaßt und ein Detektorsignal (sd) erzeugt, einen Periodizitätsdetektor (2), der die Periodizität dieser Schwingungen erfaßt und ein Synchronisationssignal (ss) erzeugt, einen Steuerkreis (3) und einen Wandler (4) zur Erzeugung von Kompensationsschwingungen, die auf die mechanische Struktur (S) übertragen werden, um die periodischen Schwingungen zu kompensieren, dadurch gekennzeichnet, daß der Steuerkreis (3) wenigstens die folgenden Bestandteile enthält

- einen Synchronfilterkreis (30) für das Detektorsignal (sd), der von dem Synchronisationssignal (ss) gesteuert wird, wobei der Synchronfilterkreis (30) ein Filtersignal (sf) erzeugt, dessen Frequenzbereich nur die momentane Grundfrequenz des Detektorsignals (sd) und/oder dazu harmonische Frequenzen umfaßt,

- einen Regulierkreis (31) für das Filtersignal (sf), der das Filtersignal (sf) empfängt und ein Gegenschwingungs-Steuersignal (sca) erzeugt, das an den Wandler (4) zur Erzeugung von Gegenschwingungen weitergeleitet wird, wodurch die Amplitude des Detektorsignals (sd) minimiert wird.

2. Vorrichtung nach Anspruch 1, dadruch gekennzeichnet, daß der Synchronfilterkreis (30) wenigstens ein Paßbandfilterelement (303, 304) mit einstellbaren Kondensatoren enthält, wobei das Filterelement mit einstellbaren Kondensatoren an seinem Eingang zur Einstellungssteuerung das Synchronisationssignal (ss) und an seinem Filtereingang das Detektorsignal (sd) empfängt.

3. Vorrichtung nach Anspruch 1, gekennzeichnet dadurch, daß die mechanische Struktur (S), bei der die periodischen Schwingungen auftreten, einen Bereich (M) enthält, von dem diese Schwingungen ausgehen und der von einem Stützbereich bzw. einem Gestell (C) über eine Aufhängung (SU) getragen wird, und daß der Detektor-Wandler (1) aus den folgenden Bestandteilen besteht:

- einem ersten Detektor-Wandler (11), der mechanisch mit dem Ausgangsbereich (M) der Schwingungen verbunden ist und ein einer Bewegung entsprechendes erstes Detektorsignal (sd1) erzeugt,

- einen zweiten Detektor-Wandler (12), der mechanisch mit dem Gestell (C) verbunden ist und ein zweites Detektorsignal (sd2) entsprechend einem Bewegungsanstieg erzeugt, wobei der Synchronfilterkreis (30) aus einem ersten und einem zweiten Paßbandfilterelement (303, 304) mit einstellbaren Kondensatoren besteht, die das erste bzw. das zweite Detektorsignal (sd1, sd2) empfangen und ein erstes bzw. zweites Filtersignal (sf1, sf2) an den Regulierkreis (31) weiterleiten.

4. Vorrichtung nach Anspruch 3, dadurch gekennzeichnet, daß der erste und zweite Detektor-Wandler (11, 12) Beschleunigungsmesser sind und die Detektorsignale an das erste bzw. zweite Filterelement (303, 304) mit einstellbaren Kondensatoren über ein Doppelintegrierelement (303a) bzw. einen Gegenfilterelement (304a) geleitet werden.

5. Vorrichtung nach Anspruch 3 und 4, dadurch gekennzeichnet, das der Anstiegskontrollkreis (CG) einen Verstärker (310) zur einstellbaren Verstärkung bzw. Dämpfung des Anstiegs enthält, der an seinem Eingang für den variablen Anstieg das erste Filtersignal (sf1) und an seinem Eingang für die Steuerung des Anstiegs ein der Amplitude des zweiten Filtersignals (sf2) proportionales Signal empfängt, wobei der Ausgang des Verstärkers (310) für den veränderlichen Anstieg ein derartiges Gegenschwingungs-Steuerungssignal (sca) an den die Kompensationsschwingungen erzeugenden Wandler (4) sendet, daß die Amplitude des zweiten Filtersignals (sf2) minimiert wird.

6. Vorrichtung nach Anspruch 5, dadurch gekennzeichnet, daß der Regulierkreis (31) für das Filtersignal, der das Filtersignal empfängt und ein Gegenschwingungs-Steuersignal erzeugt, außerdem einen Phasenkontrollkreis (CP 32) enthält, der eine Phasenkorrektur zwischen dem ersten und zweiten Detektorsignal (sd1, sd2) und/oder dem ersten und zweiten Filtersignal (sf1, sf2) ermöglicht.

7. Vorrichtung nach Anspruch 5 und 6, dadurch gekennzeichnet, daß der Anstiegskontrollkreis (CG), der das der Amplitude des zweiten Filtersignals (sf2) proportionale Signal erzeugt, hintereinandergeschaltet die folgenden Bestandteile umfaßt:

- einen Demodulierkreis (311), der über seine beiden Demoduliereingänge das erste und das zweite Filtersignal (sfl, sf2) empfängt und ein Demoduliersignal erzeugt,

- einen Integrierkreis (312), der das Demoduliersignal empfängt und die Filterung der Produkte der Zwischenmodulation sowie die Fehlerkorrektur dieses Dimoduliersignales bei Dauerbetrieb sicherstellt, wobei der Ausgang des Integrierkreises (312) mit dem Eingang für die Steuerung des Anstiegs des Verstärkers (310) zur Einstellung des Anstiegs verbunden ist.

8. Vorrichtung nach Anspruch 6, dadurch gekennzeichnet, daß der Phasenkontrollkreis (CD32) ein Phasenvergleichselement (321) enthält, das an einem ersten und einem zweiten Vergleichseingang das erste Filtersignal (sf1) bzw. über einen Differenzierkreis (320) das zweite Filtersignal (sf2) empfängt und ein Phasenkorrektur-Steuersignal über einen Integrierkreis (322) an das erste Filterelement (303) mit einstellbaren Kondensatoren sendet, wobei die Phasenkorrektur durch Verschieben der momentanen Hauptfrequenz des Filters erfolgt.

9. Vorrichtung nach Anspruch 8, dadurch gekennzeichnet, daß auf den Integrierkreis (322) eine Diode mit einstellbarer Kapazität (3221) folgt, die parallel mit einem nicht eingestellten Kondensator des ersten Filters mit einstellbaren Kondensatoren verbunden ist.

10. Vorrichtung nach Anspruch 1, dadurch gekennzeichnet, daß, falls die Schwingungen aus einem nicht sinusförmigen periodischen Signal bestehen, die Vorrichtung eine Vielzahl von identischen, parallelgeschalteten Steuerkreisen (3Hi) enthält, wobei i für die Rangstufe der bearbeiteten Schwingung steht und wobei jeder Steuerkreis (3Hi) das erste und zweite Detektorsignal (sd1, sd2) empfängt und der Steuerkreis, der dem Harmonierang i entspricht, als Synchronisationssignal ein entsprechendes Synchronisationssignal mit einer Frequenz empfängt, die entsprechend der Rangstufe i ein Mehrfaches der Frequenz des Synchronisationssignals beträgt, welches vom Steuerkreis für die zu dämpfende Grundschwingung empfangen wird, wobei jeder Steuerkreis (3Hi) mit dem Betätigungselement über ein einen Leistungsverstärker (33) betätigendes Summierelement (330) verbunden ist.

**Claims**

1. A device for damping the periodic vibrations of a mechanical structure (S), comprising at least one transducer (1) detecting these vibrations and delivering a detected signal (sd), a detector (2) of the periodicity of these vibrations delivering a synchronizing signal (ss), a control circuit (3) and a transducer (4) generating compensation vibrations applied to said mechanical structure (S) in order to compensate for the periodic vibrations, wherein the said control circuit (3) includes at least:

   - a circuit (30) for synchronous filtering of the said detected signal (sd), controlled by the said synchronizing signal, said filtering circuit delivering a filtered signal (sf) whose frequency spectrum contains only the instantaneous fundamental frequency of the detected signal (sd) and/or its harmonic frequencies,
   - a circuit (31) for regulating the filtered signal (sf) receiving the said filtered signal (sf) and delivering an antivibration-control signal (sca) applied to the said generating transducer (4), in such a way as to minimise the amplitude of the detected signal (sd).

2. The device as claimed in claim 1, wherein the said synchronous filtering circuit (30) consists of at least one switched-capacitance filter (303, 304), of band-pass type, the said switched-capacitance filter receiving said synchronizing signal (ss) on its switching control input and said detected signal (sd) on its filtering input.

3. The device as claimed in claim 1, wherein said mechanical structure (S) which is the seat of periodic vibrations, including a source part (M) of said vibrations, supported by a support part, or chassis (C) by way of a suspension (Su), said detector transducer is formed by:

   - a first detector transducer (11), mechanically joined with said source part (M) of said vibrations and delivering a first detected signal (sdl), akin to a displacement,
   - a second detector transducer (12), mechanically joined to said chassis (C) and delivering a second detected signal (sd2) akin to an acceleration, said synchronous filtering circuit (30) being formed by a first (303) and a second (304) switched-capacitance band-pass filter receiving the first (sdl), respectively second (sd2) detected signal and delivering a first (sf1), respectively second (sf2) filtered signal to said regulating circuit.

4. The device as claimed in claim 3, wherein said first (11) and second (12) transducers consist of accelerometers, the detected signals being delivered to said first (303), respectively second (304) switched-capacitance filter by way of a double integrator (303a), respectively an anti-aliasing filter (304a).

5. The device as claimed in claims 3 and 4, wherein the gain-monitoring circuit (CG) comprises:

   - an amplifier (310) with adjustable gain (attenuation) receiving said first filtered signal (sf1) on its variable-gain input and a signal proportional to the amplitude of the second filtered signal (sf2) on its gain-control input, the output from said variable-gain amplifier (310) delivering said antivibration-control signal (sca) to said compensation-vibration generator (4), in such a way that the amplitude of the second filtered signal (sf2) is a minimum.

6. The device as claimed in claim 5, wherein said circuit (31) for regulating the filtered signal receiving the filtered signal and delivering an antivibration-control signal further comprises at least one phase-monitoring circuit (cp32) making it possible to correct the phase shift between the first (sd1) and the second (sd2) detected signal and/or the first (sf1) and the second (sf2) filtered signal.

7. The device as claimed in claims 5 and 6, wherein the gain-monitoring circuit (CG) producing said signal proportional to the amplitude of the second filtered signal (sf2) comprises in cascade:

   - a demodulator circuit (311) receiving the first (sf1) and the second (sf2) filtered signal on its two demodulating inputs, and delivering a demodulated signal,

- an integrator circuit (312) receiving the demodulated signal and providing the filtering of the cross-modulation products and the steady-state error compensation of the said demodulated signal, the integrator circuit (312) having its output connected up to the gain-control input of the adjustable-gain amplifier (310).

8. The device as claimed in claim 6, wherein the phase-monitoring circuit (cp32) includes a phase comparator (321) receiving on a first and a second comparison input the first (sf1), by way of a differentiating circuit, respectively second (sf2), filtered signal, and delivering a phase correction control signal to said first switched-capacitance filter (303) by way of an integrator circuit (322), the phase correction being obtained by shifting the instantaneous central frequency of the filter.

9. The device as claimed in claim 8, wherein said integrator circuit (322) is followed by a variable-capacitance diode (3221) connected up in parallel with a non-switched capacitor of said first switched-capacitance filter.

10. The device as claimed in the preceding claim 1, wherein, in the case where said vibrations consist of a non-sinusoidal periodic signal, said device includes a plurality of identical control circuits (3Hi) connected up in parallel, where i represents the rank of the harmonic processed, each control circuit (3Hi) receiving the first (sd1) and second (sd2) detected signals, and the control circuit relating to the harmonic of rank i receiving as synchronizing signal a corresponding synchronizing signal whose frequency is a multiple, in the ratio i, of that of the synchronizing signal received by the control circuit relating to the fundamental of the vibration to be attenuated, each control circuit (3Hi) being connected to the actuator by way of an adder (330) feeding into a power amplifier (33).

# FIG.1a.(ART ANTERIEUR)

# FIG.1b.(ART ANTERIEUR)

FIG.2a.

FIG.2b.

FIG.3.

FIG.4a.

# FIG.4b.

# FIG.4c.

# FIG.5.